# EUROPEAN PATENT APPLICATION

(11) **EP 1 288 688 A2**
(43) Date of publication of application: **05.03.2003**
(21) Application number: 02006553.8
(22) Date of filing: 20.03.2002
(51) Int. Cl.: G02B 6/42

(54) **Optical waveguide module**

(30) Priority: 28.08.2001 JP 2001258140
(71) Applicant: Sumitomo Electric Industries, Ltd., Osaka-shi, Osaka 541-0041 (JP)
(72) Inventor: Sasaki, Takashi, Sumitomo Electric Ind., Ltd., Yokohama-shi, Kanagawa 244-8588 (JP); Komiya, Takeo, Sumitomo Electric Ind., Ltd., Yokohama-shi, Kanagawa 244-8588 (JP); Fujimura, Yasushi, Sumitomo Electric Ind., Ltd., Yokohama-shi, Kanagawa 244-8588 (JP); Saito, Masahide, Sumitomo Electric Ind., Ltd., Yokohama-shi, Kanagawa 244-8588 (JP)
(74) Representative: HOFFMANN - EITLE

(57) **Abstract**

In a planar waveguide optical circuit 1, a inclined groove 3 is formed at an inclination angle θ with respect to the vertical axis so as to cross optical waveguides 2ₙ. A reflection filter 4 structured such that the difference in reflectivity between orthogonal polarization is compensated for with respect to signal light is installed inside the groove 3, the reflected light from the reflection filter 4 is detected by the photodetectors 6ₙ, and the optical intensity of the signal light is monitored. This makes it possible to accurately monitor the optical intensity regardless of the polarization state of the signal light. Also, since the inside of the groove 3 including the reflection filter 4 is sealed with a filler resin 5, any deterioration in long-term stability that would otherwise be caused by contamination of these components is prevented. Thus, the optical waveguide module with which the structure. of the optical circuit is simpler, and the optical intensity can be correctly monitored regardless of the state of polarization of the signal light is realized.

## Description

### BACKGROUND OF THE INVENTION

### Field of the Invention

The present invention relates to an optical. waveguide module having a planar waveguide type of optical waveguide formed on a substrate.

### Related Background Art

In an optical circuit that makes use of an optical waveguide, such as an optical fiber or planar optical waveguide, it is sometimes desirable to control the optical intensity of signal light to a suitable value, such as by keeping the optical intensity constant for signal light transmitted through optical waveguides. In such a case, the optical intensity of the signal light is monitored in the optical circuit, and sometimes the optical intensity is also controlled on the basis of the results of this monitoring.

### SUMMARY OF THE INVENTION

This monitoring of the optical intensity of signal light used to be accomplished by providing an optical coupler on an optical waveguide and splitting part of the signal light. With this method, an optical coupler is provided at a specific location along the optical waveguide, a few percent of the signal light is split, and the optical intensity of this split light is monitored with a photodetector, which allows the optical intensity of the signal light transmitted through this optical waveguide to be monitored.

A problem with this use of an optical coupler, though, is that it increases the number of.optical components that make up the optical circuit, and furthermore, since these have to be fused together, the structure and manufacturing process of the optical circuit become more complicated.

In contrast, methods have been proposed in which an optical coupler is not used, and instead part of the signal light is reflected and the optical intensity monitored.. For instance, with the optical device discussed in Japanese Patent Application Laid-Open H6-331837, an end face is formed at an angle with respect to the optical axis at a specific location along an optical waveguide, reflected light, part of the signal. light reflected from this end face in a direction different from the optical axis, is detected, and the optical intensity is monitored. Also, the optical fiber discussed in Japanese Patent Application Laid-Open 20.00-155235 relates to a light splitting/merging structure, in which an end face is formed perpendicular to the optical axis at a specific location along an optical fiber, part of the signal light is emitted outside, and part of the emitted light is reflected and taken off by another end face that is inclined with respect to the optical axis.

However, when part of the signal light is thus reflected and used to monitor the optical intensity, the reflectivity of the signal light at the inclined end face varies with the state of polarization of the signal light being reflected. Consequently, a problem is that the optical intensity cannot be correctly monitored unless the state of polarization of the signal light transmitted through the optical waveguide is specified. Also, the end face of the optical waveguide can become contaminated if it is exposed to the outside atmosphere, resulting in inferior long-term stability of the reflectivity and so forth.

The present invention was conceived in an effort to solve the above problems, and it is an object thereof to provide an optical waveguide module with which the structure of the optical circuit is simpler, and the optical intensity can be correctly monitored regardless of the state of polarization of the signal light.

To achieve the stated object, the optical waveguide module according to the present invention is characterized by comprising (1) a planar waveguide optical circuit, consisting of a substrate and a planar waveguide type of optical waveguide formed on this substrate, and having a groove formed at a predetermined inclination angle θ (0° < θ) with respect to the vertical axis perpendicular to the optical axis of the optical waveguide so as to cross a specific area of the optical waveguide, (2) a reflection filter that is installed on the inside of the groove of the planar waveguide optical circuit including a portion where signal light transmitted through the optical waveguide passes through, and that reflects part of the signal light according to a specific reflectivity in which the difference in reflectivity between the orthogonal polarization has been compensated, (3) a filler resin installed so as to seal at least the inside of the groove, and (4) a photodetector that detects reflected light of the signal light reflected by the reflection filter; wherein N number (N is a plurality) of optical. waveguides are provided as the optical waveguide of the planar waveguide optical circuit, and N number of photodetectors corresponding to said N number of optical waveguides are provided as the photodetector, and a light path isolation means for isolating N number of reflected light paths, in which part of the signal light transmitted through the N number of optical waveguides is reflected by the reflection filter to the corresponding photodetectors, is provided between the N number of reflected light paths.

With the above-mentioned optical waveguide module, rather than the optical waveguide being split with an optical coupler, of the signal light is reflected in an inclined groove provided to the optical waveguide, and the optical intensity of the signal light can be monitored by means of this reflected light. As a result, the structure and manufacturing process of the optical circuit are simplified.

Also, rather than the reflection of the signal light being performed on the end face of the groove, a reflection filter that has undergone polarization compensation for equalizing the reflectivity between the polarization states is installed in the groove, and part of the signal light is reflected by this reflection filter and used to monitor optical intensity. Here, since the reflectivity of the signal light by the reflection filter becomes substantially constant regardless of the polarization state of the signal light transmitted through the optical waveguide, it is possible to monitor the optical intensity accurately regardless of the polarization state of the signal light. Also, since the inside of the groove including the reflection filter is sealed with a filler resin, the end face of the groove and the reflection filter do not come into contact with the outside atmosphere, which prevents any deterioration in long-term stability that would otherwise be caused by contamination of the end face and so forth.

Moreover, when the planar waveguide optical circuit thus has N number (N channels) of optical waveguides and the optical intensity is monitored for the signal light of N channels transmitted through the respective optical waveguides, the N channels of signal light reflected by the reflection filter will propagate through the respective reflected light paths and be detected by the corresponding photodetectors. Here, the signal light from the optical waveguides reflected by the reflection filter is detected by the corresponding photodetectors, but in some cases light scattering or reflection caused by the filter or other components, the spreading of the transmitted light, and so forth may cause part of the light to be incident on photodetectors of other adjacent channels, resulting in worse crosstalk.

In contrast, providing a light path isolation means between adjacent reflected light paths as above prevents most or all of the crosstalk that would otherwise occur between adjacent channels. As a result, the optical intensity of the signal light in each channel can be accurately monitored for the N channels of signal light transmitted through the respective optical waveguides.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

### BRIEF DESCRIPTION OF THE DRAWINGS

Fig. 1 is a plan view of the structure in a first embodiment of the optical waveguide module;
Fig. 2 is a cross section and detail enlargement of the structure of the optical waveguide module shown in Fig. 1, cut along the optical axis;
Fig. 3 is a graph of the change in polarization dependent loss when the inclination of the reflection surface is varied with respect to the optical axis along which the signal light is transmitted;
Figs. 4A to 4D are schematic views illustrating the shape of the reflected light spot produced by the reflection filter, and the shape of the light receiving area of a photodetector;
Fig. 5 is a plan view of the structure in the second embodiment of the optical waveguide module;
Fig. 6 is a cross section and detail enlargement of the structure of the optical waveguide module shown in Fig. 5, cut along the optical axis;
Fig. 7 is a plan view of the structure in the third embodiment of the optical waveguide module;
Fig. 8 is a cross section and detail enlargement of the structure of the optical waveguide module shown in Fig. 7, cut along the I-I line;
Fig. 9 is a plan view of the structure in the fourth embodiment of the optical waveguide module;
Fig. 10 is a cross section and detail enlargement of the structure of the optical waveguide module shown in Fig. 9, cut along the II-II line;
Fig. 11 is a plan view of the structure in the fifth embodiment of the optical waveguide module; and
Fig. 12 is a cross section and detail enlargement of the structure of the optical waveguide module shown in Fig. 11, cut along the III-III line.

### DESCRIPTION OF THE PREFERRED EMBODIMENTS

Preferred embodiments of the optical waveguide module according to the present invention will now be described in detail through reference to the drawings. Those elements that are the same will be numbered the same in the description of the drawings, and redundant descriptions will be omitted. The scale in the drawings does not necessarily coincide with that in the description.

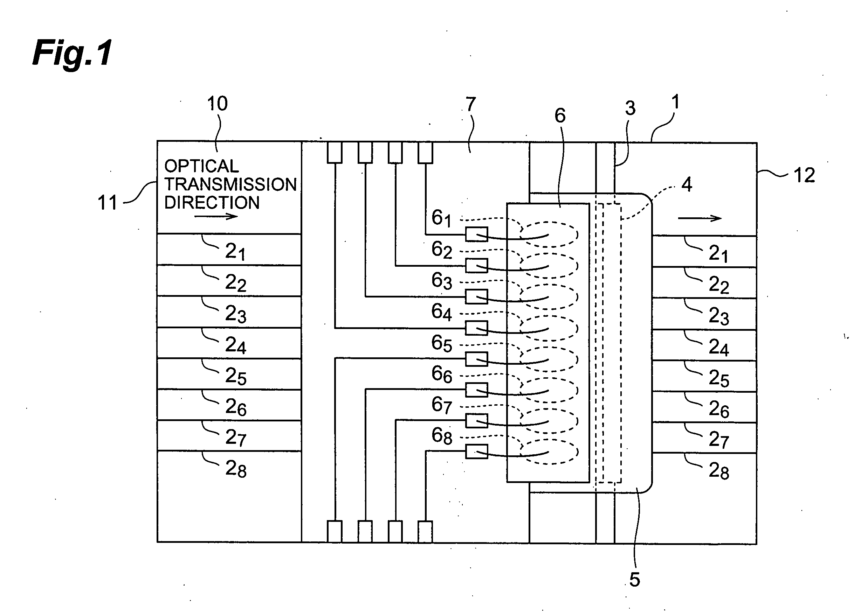

Fig. 1 is a plan view of the structure in a first embodiment of the optical waveguide module according to the present invention. This optical waveguide module comprises a planar waveguide optical circuit 1 having a substrate 10 and eight (eight channels) planar waveguide type of optical waveguides 2₁ to 2₈ formed on the substrate 10.

The optical waveguides 2₁ to 2₈ are formed parallel to each other and equidistantly, extending from an input end 11 of the planar waveguide optical circuit 1 to an output end 12 in a predetermined optical transmission direction (the direction indicated by the arrow in Fig. 1). A groove 3 that cuts across the optical waveguides 2₁ to 2₈ is provided at a specific location with respect to the optical transmission direction of the planar waveguide optical circuit 1.

On the inside of this groove 3 is installed a reflection filter 4 for reflecting part of the signal light transmitted through the optical waveguides 2₁ to 2₈ respectively, with the reflection filter 4 being sealed in the groove 3 by a filler resin 5. A sub-mounting substrate 7 is installed above the planar waveguide optical circuit 1 at a location further upstream than the groove 3, and a photodetector array 6 having eight photodetectors 6₁ to 6₈ corresponding to the optical waveguides 2₁ to 2₈ is installed above the filler resin 5 and the sub-mounting substrate 7. The planar waveguide optical circuit 1 and the sub-mounting substrate 7 are soldered together, for example, as are the sub-mounting substrate 7 and the photodetector array 6.

In Fig. 1, the dotted lines indicate the shapes of the light receiving areas of the photodetectors 6₁ to 6₈. The sub-mounting substrate 7 is a mounting member for mounting the photodetector array 6, and on its top surface are formed wiring, electrodes, etc., for reading out the photodetection signals from the photodetectors 6₁ to 6₈, as shown schematically in Fig. 1.

In this embodiment, a light path'isolation means (not illustrated) for isolating reflected light paths is provided between each of the eight reflected light paths along which part of the signal light transmitted through the eight channels of optical waveguides 2₁ to 2₈ is reflected by the reflection filter 4 to the corresponding photodetectors 6₁ to 6₈.

This light path isolation means serves to suppress the generation of crosstalk between adjacent channels. For the light path isolation means, for example, a light blocking means provided within the planar waveguide optical circuit 1 or within the filler resin 5, grooves between the waveguide cores of the optical waveguides 2₁ to 2₈, or the like, can be used. Detailed description of this light path isolation means is given below in the third to fifth embodiments.

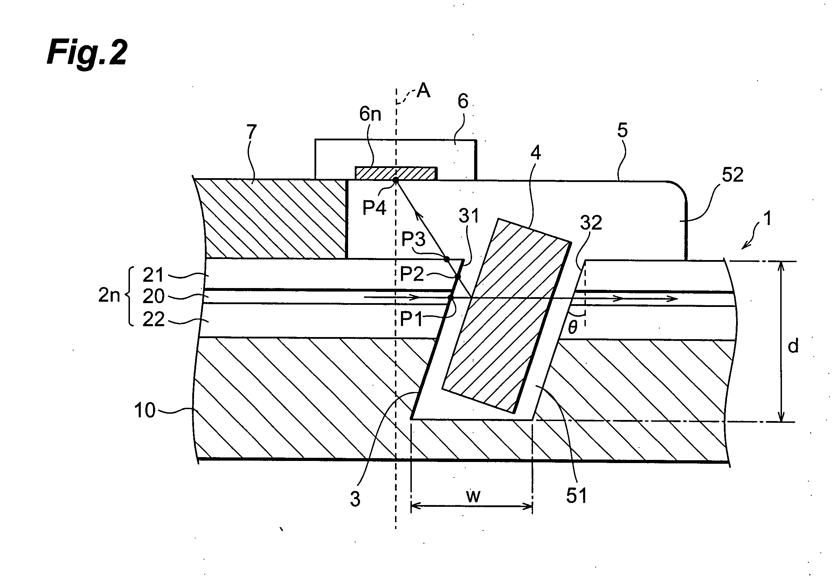

Fig. 2 is a cross section of the structure of the optical waveguide module shown in Fig. 1, cut along the optical axis (the optical transmission direction of the planar waveguide optical circuit 1) of the optical waveguides 2ₙ (n = 1 to 8). In Fig. 2, the portion including the groove 3, reflection filter 4, and the photodetector array 6 is shown enlarged.

As shown in Fig. 2, the optical waveguide 2ₙ in the planar waveguide optical circuit 1 comprises lower cladding 22, a core 20, and upper cladding 21 formed on the substrate 10. The groove 3 that cuts across the optical waveguide 2ₙ at a specific area is formed at a specific inclination angle θ (0° < θ) with respect to the vertical axis (shown by the dotted line in Fig. 2) perpendicular to the optical axis of the optical waveguide 2ₙ (perpendicular to the substrate 10), to a depth d including at least the area where the signal light transmitted through the optical waveguide 2ₙ passes through, corresponding to the core 20. in this embodiment, the depth d of the groove 3 is set to be greater than the thickness of the optical waveguide 2ₙ.

The reflection filter 4 is inserted on the inside of the groove 3. The reflection filter 4 is installed so as to include at least the area where the signal light transmitted through the optical waveguide 2ₙ passes through, at substantially the same angle θ as the groove 3 with respect to the optical axis. This reflection filter 4 preferably consists of a dielectric multilayer film filter, and is designed such that part of the signal light with a specific wavelength (within the specified wavelength band) transmitted through the optical waveguide 2ₙ is reflected at a predetermined reflectivity.

Furthermore, the dielectric multilayer film filter that constitutes this reflection filter 4 is formed so that the difference in reflectivity is compensated for between the orthogonal polarization when signal light is reflected, and the signal light components in various states of polarization are reflected at substantially the same reflectivity. This setting of the reflectivity with respect to the signal light components in various polarization states is accomplished, for example, by varying the dielectric materials of the respective layers that make up the dielectric multilayer film filter, the combinations of these material, the thickness of the respective layer films, etc.

The inside of the groove 3, including the reflection filter 4, is sealed with the filler resin 5. The filler resin 5 used in this embodiment is composed of an inner filler resin 51 that seals the inside of the groove 3, and an upper filler resin 52 that seals a specific portion of the top surface of the planar waveguide optical circuit 1 including the upper part of the groove 3. The inner filler resin 51 and upper filler resin 52 are integrally formed using the same resin material.

The photodetector array 6, which has photodetectors 6ₙ (n = 1 to 8) corresponding to the optical waveguide 2ₙ, is installed on the top side of the sub-mounting substrate 7 and the upper filler resin 52 part of the filler resin 5. The photodetector array 6 is disposed such that the reflected light obtained when part of the signal light transmitted through the optical waveguide 2ₙ is reflected by the reflection filter 4 will be incident on the light receiving area of the corresponding photodetector 6ₙ. Because of the incident direction of the reflected light, it is preferable for the photodetectors 6ₙ to be a rear incidence type of photodiode or the like.

With the above structure, when the signal light transmitted through an optical waveguide 2ₙ is emitted through an upstream end face 31 to the inner filler resin 51 inside the groove 3, the reflection filter 4, which is inclined with respect to the optical axis, reflects part of this signal light diagonally above the planar waveguide optical circuit 1 at a predetermined reflectivity that has undergone polarization compensation so as to be equal with respect to polarization states. The rest.of the signal light passes through the inner filler resin 51 and the reflection filter 4, and is again incident on the optical waveguide 2ₙ via a downstream end face 32.

Meanwhile, the light reflected by the reflection filter 4 is incident on the photodetector 6ₙ via the inner filler resin 51, the optical waveguide 2ₙ, and the upper filler resin 52. The optical intensity of the signal light transmitted through the'optical waveguide 2ₙ is monitored on the basis of the optical intensity of the reflected light detected by the photodetector 6ₙ.

With the optical waveguide module in this embodiment, rather than the optical waveguide itself being split by means of an optical coupler or other such optical components, part of the signal light is reflected in the inclined groove 3 provided so as to cut across the respective optical waveguides 2ₙ, and used for monitoring the optical intensity. This simplifies the structure of the optical circuit of an optical waveguide module with which the optical intensity can be monitored. Also, there is no need to install extra optical components, fuse the optical waveguides together, and so forth,' so the manufacturing process is similarly simplified.

The reflection of the signal light is not performed by the end faces 31 and 32 of the groove 3, and instead part of the signal light is reflected by the reflection filter 4, which has undergone polarization compensation so that the reflectivity between the orthogonal polarization will be substantially equal. Here, since the reflectivity of the signal light produced by the reflection filter 4 becomes substantially constant regardless of the polarization state of the signal light transmitted through the optical waveguide 2ₙ, the optical intensity of the reflected light detected by the photodetector 6ₙ can be used to accurately monitor the optical intensity regardless of the polarization state of the signal light.

Also, the inside of the groove 3 including the reflection filter 4 is sealed by the filler resin 5. Since the end faces 31 and 32 of the groove 3, the reflection filter 4, and so forth do not come into contact with the outside atmosphere, any deterioration in long-term stability that would otherwise be caused by contamination of these components is prevented.

Moreover, the light path isolation means is provided to the reflected light paths from the reflection filter 4 to the photodetectors 6₁ to 6₈ for isolating the reflected light paths from each other between each of the eight reflected light paths. This effectively prevents the generation of crosstalk between adjacent channels.

It is preferable here if the inclination angle θ of the groove 3 and the reflection filter 4 with respect to the vertical axis is within an angle range of. 0° < θ ≤ 40°.

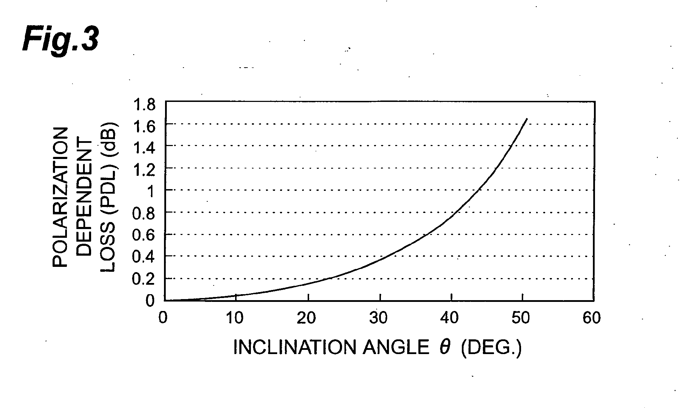

Fig. 3 shows the change in polarization dependent loss (PDL) when we vary the inclination of the reflection surface with respect to the optical axis along which the signal light is transmitted. As shown in this graph, the reflection characteristics with an ordinary reflection surface are such that there is no polarization dependence and PDL = 0 when the inclination angle θ with respect to the vertical axis is 0° (when the signal light is reflected in the opposite direction). As the inclination angle θ increases, so does the polarization dependence of reflectivity, and there is a sharp increase in the PDL value once θ goes over 40°.

If θ thus becomes larger and the PDL increases, it becomes difficult for the reflection filter 4 to perform polarization compensation for the difference in reflectivity. Specifically, with a structure in which the inclination angle θ is large, the PDL value is large and varies sharply with θ, so extremely stringent numerical conditions are required for the refractive index of the respective layer materials, the film thickness, and so forth in the dielectric multilayer film filter used to compensate for the difference in reflectivity. Consequently, for practical purposes it is difficult to design and produce the dielectric multilayer film filter of the reflection filter 4 so that the difference in reflectivity will be sufficiently compensated for. In contrast, if the inclination angle θ is set to an angle range of 0° < θ ≤ 40°, then the difference in reflectivity can be compensated for at an adequate precision'at the reflection filter 4.

It is preferable for the filler resin 5 to be composed of a resin material having substantially the same refractive index as the core 20 of the optical waveguides 2ₙ (such as within a margin of error of 1%).

If the inner filler resin 51 is a resin material having substantially the same refractive index as the core 20, then unnecessary reflection will be minimized when signal light is emitted from the optical waveguides 2ₙ to the inner filler resin 51 (see point P1 in Fig. 2). Also, unnecessary reflection will be minimized when the light reflected by the reflection filter 4 is incident from the inner filler resin 51 to the optical waveguides 2ₙ (see point P2).

If the upper filler resin 52 is a resin material having substantially the same refractive index as the core 20, then unnecessary reflection will be minimized when the light reflected by the reflection filter 4 is incident from the optical waveguide 2ₙ to the upper filler resin 52 (see point P3).

If unnecessary reflection occurs at the interfaces of the optical waveguides 2ₙ, the inner filler resin 51, and the upper filler resin 52, the reflection characteristics of these components will have polarization dependence according to the respective reflection angles thereof. Therefore, if reflection occurs without the refractive index being matched between these components, then even though polarization compensation is performed for the difference in reflectivity at the reflection filter 4, the optical intensity of the/reflected light detected by the photodetector 6ₙ will depend on the polarization state of the signal light. In contrast, if the refractive indexes are matched so as to minimize unnecessary reflection at the respective interfaces, it will be possible to accurately monitor optical intensity regardless of the polarization state of the signal light.

When the upper filler resin 52 is provided in' addition to the inner filler resin 51 as in this embodiment, it is preferable to use resin materials having substantially the same refractive index for these filler resins 51 and 52. This allows the unnecessary reflection of signal light (reflected light) at the interface of the inner filler resin 51, as well as the unnecessary reflection of signal light (reflected light) at the interface of the upper filler resin 52 to be similarly controlled.

The filler resins 51 and 52 may also be formed integrally, using the same resin material. This simplifies the step of installing the resin. The difference in refractive index between the core 20 and the upper cladding 21 is usually small enough to be ignored for the purposes of this reflection problem.

If a problem is posed by unnecessary reflection when the light reflected by the reflection filter 4 is incident from the upper filler resin 52 to a photodetector 6ₙ (see point P4), it is preferable to provide an antireflective coating at the interface between the filler resin 5 and the photodetector 6ₙ. This minimizes the unnecessary reflection that occurs when reflected light from the reflection filter 4 is incident on the photodetector 6ₙ, and makes it possible to accurately monitor optical intensity regardless of the polarization state of the signal light, just as. with the unnecessary reflection at the above-mentioned interfaces of the optical waveguides 2ₙ, the inner filler resin 51, and the upper filler resin 52.

As to the structure of the photodetectors 6ₙ and the photodetector array 6, as shown in Fig. 1, it is preferable if the light receiving areas of the photodetectors 6ₙ are formed in a substantially elliptical shape whose major axis lies in the direction of the optical axis of the optical waveguides 2ₙ, and whose minor axis lies in the direction in which the optical waveguides 2ₙ are laid out.

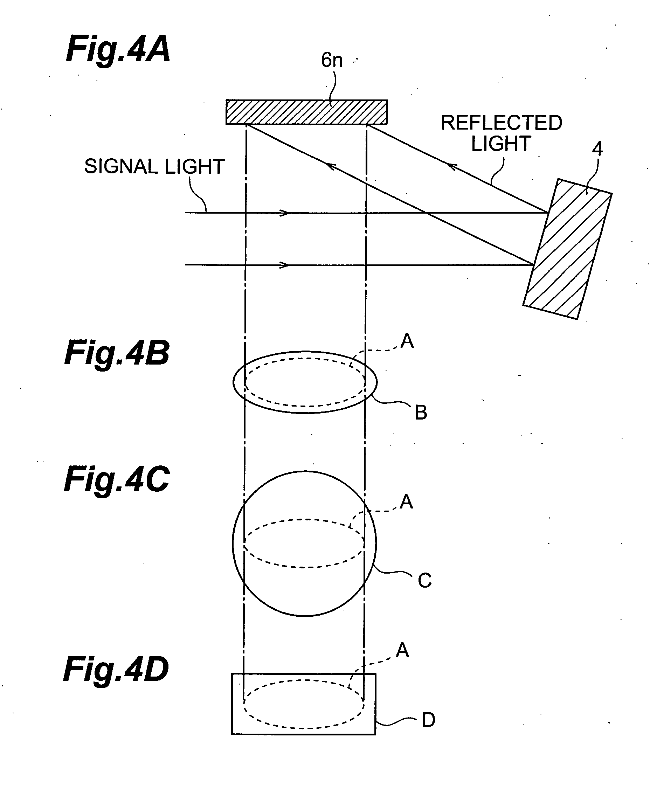

Fig. 4A to 4D are schematic views illustrating the shape of the reflected light spot of the reflected light produced by the reflection filter 4, and the shape of the light receiving area of a photodetector 6ₙ. The signal light transmitted through an optical waveguide 2ₙ has a substantially circular signal light spot because of the shape of the core 20, etc. Therefore, the reflected light produced when this signal light is reflected by the inclined reflection filter 4 (see the side view in Fig. 4A) forms an elliptical reflected light spot at the light receiving area of the photodetector 6ₙ, as indicated by the dotted line A in the plan view of Fig. 4B.

On the other hand, if the light receiving areas of the photodetectors 6ₙ are formed in a substantially elliptical shape corresponding to the elliptical shape of the reflected light spot and encompassing this reflected light spot, as indicated by the solid line B in Fig. 4B, the reflected light can be detected at a sufficiently high light receiving efficiency. It is also possible to use a lens or the like to focus the elliptical reflected light before it is incident on the photodetector, but this drives up the cost because it entails more optical components. By contrast, if the shape of the light receiving areas of the photodetectors 6ₙ is made elliptical to match the reflected light spot, the structure of the optical waveguide module will be simplified and the cost reduced.

If the shape of the light receiving area is circular, as indicated by the solid line C in Fig. 4C, the efficiency at which the reflected light is received will be the same as with a substantially elliptical shape, but the light receiving area will be wider in the direction in which the photodetectors are laid out, and which corresponds to the vertical direction in Fig. 4C (see 6₁ to 6₈ in Fig. 1). Consequently, the photodetectors cannot be brought together at as high a density or as small a layout pitch in the photodetector array, which increases the surface area of the optical circuit and drives up its cost.

By contrast, if the shape of the light receiving area is substantially elliptical, the layout pitch of the photodetectors can be kept to a minimum, affording a more efficiency optical circuit configuration.

If the shape of the light receiving area is rectangular, as indicated by the solid line D in Fig. 4D, the photodetectors can be grouped together at the same layout pitch as with a substantially elliptical' shape, but this configuration results in an unnecessary light receiving area portion that is not used to receive the reflected light being produced at the corners of the light receiving area. This light receiving area portion becomes a source of noise with respect to the photodetection signal, and therefore results in a decrease in efficiency in reflected light detection, such as a deterioration in S/N ratio or a smaller effective dynamic range. The same problem is encountered with the above-mentioned circular light receiving area.

On the other hand, if the shape of the light receiving area is substantially elliptical, this will reduce the generation of noise and so forth from the unnecessary light receiving area portion, allowing the optical intensity to be monitored more efficiently. Still, a light receiving area that is circular or rectangular may be used as dictated by the layout pitch, detection efficiency, and so on required of an individual optical waveguide module.

Specific examples will now be given.for the optical waveguide module according to the above . embodiment.

A first example will now be given. In this example, the groove 3 was formed at an inclination angle θ of 30° and a width w of 25 µm in the optical axis direction. The reflection filter 4 inserted inside the groove 3 was a polarization compensated filter with a width of 11 µm and a 10%. reflectivity of signal light. The filler resin 5 comprised the same resin material for both the inner filler resin 51 and the upper filler resin 52. The refractive index of the resin material, an adhesive with adjusted refractive index, was n = 1.47 at a wavelength band of 1.51 to 1.61 µm. The photodetectors 6ₙ were each an InGaAs-PIN photodiode having an elliptical light receiving area with a diameter of 0.3 mm in the major axis direction and a diameter of 0.15 mm in the minor axis direction. The photosensitivity of this photodiode alone was 1.1 A/W.

The optical intensity of signal light was monitored using an optical waveguide module configured as above, whereupon the polarization dependence of reflectivity at the reflection filter 4 was 10% for S polarization and.10.3% for P polarization, and the polarization dependent loss (PDL) was sufficiently low at 0.1 dB, which confirmed that it was possible to monitor the optical intensity in a state in which dependence on the polarization state of the signal light has been sufficiently reduced.

The photosensitivity with respect to the incident signal light was about 0.1 A/W. This indicates that the optical intensity of the signal light component reflected by the reflection filter 4 at a reflectivity of 10% was detected by the photodetectors 6ₙ at an efficiency of close to 100%. The insertion loss of the groove 3 and the reflection filter 4 into the optical waveguides 2ₙ was about 1.0 dB, including the loss produced by reflection of the signal light by the reflection filter 4, diffraction of the signal light inside the groove 3, and so forth.

A second example will now be given. In this example, the groove 3 was formed at an inclination angle θ of 10° and a width w of 25 µm in the optical axis direction. The reflection filter 4 inserted inside the groove 3 was a polarization compensated filter with a width of 11 µm and a 10% reflectivity of signal light. The filler resin 5 comprised the same resin material for both the inner filler resin 51 and the upper filler resin 52. The refractive index of the resin material, an adhesive with adjusted refractive index, was n = 1.47 at a wavelength band of 1.51 to . 1.61 µm. The photodetectors 6ₙ were each a photodiode having an elliptical light receiving area with a diameter of 0.3 mm in the major axis direction and a diameter of 0.15 mm in the minor axis direction. The photosensitivity of this photodiode alone was 1.1 A/W.

In this example, an antireflective coating was provided at the interface between the upper filler resin 52 and the photodetectors 6ₙ in order to prevent unnecessary reflection that would be produced if reflected light were incident on the photodetectors 6ₙ.

The optical intensity of signal light was monitored using an optical waveguide module configured as above, whereupon the polarization dependence of reflectivity at the reflection filter 4 was 9.7% for S polarization and 10% for P polarization, and the polarization dependent loss (PDL) was sufficiently low at 0.1 dB, which confirmed that it was possible to monitor the optical intensity in a state in which dependence on the polarization state of the signal light has been sufficiently reduced.

The photosensitivity with respect to the incident signal light was about 0.1 A/W. This indicates that the optical intensity of the signal light component reflected by the reflection filter 4 at a reflectivity of 10% was detected by the photodetectors 6ₙ at an efficiency of close to 100%. The insertion loss of the groove 3 and the reflection filter 4 into the optical waveguides 2ₙ was about 1.0 dB, including the loss produced by reflection of the signal light by the reflection filter 4, diffraction of the signal light inside the groove 3, and so forth.

It can be seen from the first and seconds examples given above that optical waveguide modules with the above configurations make it possible to accurately monitor optical intensity regardless of the polarization state of the signal light.

Another embodiment of the optical waveguide module according to the present invention will now be described.

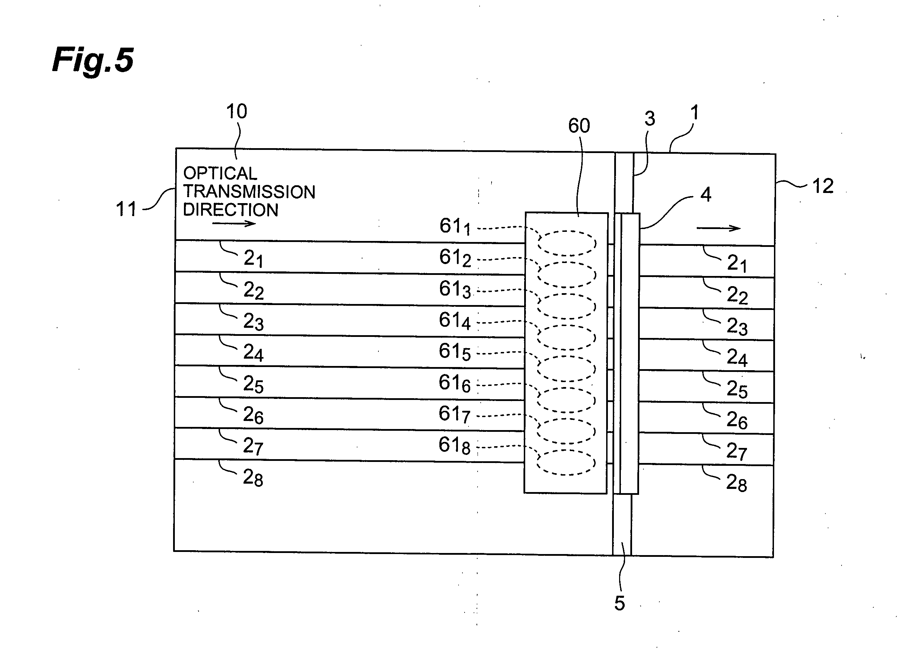

Fig. 5 is a plan view of the structure in the second embodiment of the optical waveguide module. Just as with the first embodiment, this optical waveguide module comprises a planar waveguide optical circuit 1 having a substrate 10 and eight (eight channels) planar waveguide type of optical waveguides 2₁ to 2₈ formed on the substrate 10.

The optical waveguides 2₁ to 2₈ are formed parallel to each other and equidistantly, extending from an input end 11 of the planar waveguide optical circuit 1 to an output end 12 in a predetermined optical transmission direction (the direction indicated by the arrow in Fig. 5). A groove 3 that cuts across the optical waveguides 2₁ to 2₈ is provided at a specific location with respect to the optical transmission direction of the planar waveguide optical circuit 1.

On the inside of this groove 3 is installed a reflection filter 4 for reflecting part of the signal. light transmitted through the respective optical waveguides 2₁ to 2₈, with the reflection filter 4 being sealed in the groove 3 by a filler resin 5. A photodetector array 60 having eight photodetectors 61₁ to 61₈ corresponding to the optical waveguides 2₁ to 2₈ is installed above the planar waveguide optical circuit 1 at a location further upstream than the groove 3. In Fig. 5, the dotted lines indicate the shapes of the light receiving areas of the photodetectors 61₁ to 61₈.

In this embodiment, a light path isolation means (not illustrated) for isolating reflected light paths is provided between each of the eight reflected light paths along which part of the signal light transmitted through the eight channels of optical waveguides 2₁ to 2₈ is reflected by the reflection filter 4 to the corresponding photodetectors 61₁ to 61₈.

This light path isolation means serves to suppress the generation of crosstalk between adjacent channels. For the light path isolation means, for example, a light blocking means provided within the planar waveguide optical circuit 1 or within the filler resin 5, grooves between the waveguide cores of the optical waveguides 2₁ to 2₈, or the like, can be used. Detailed description of this light path isolation means is given below in the third to fifth embodiments.

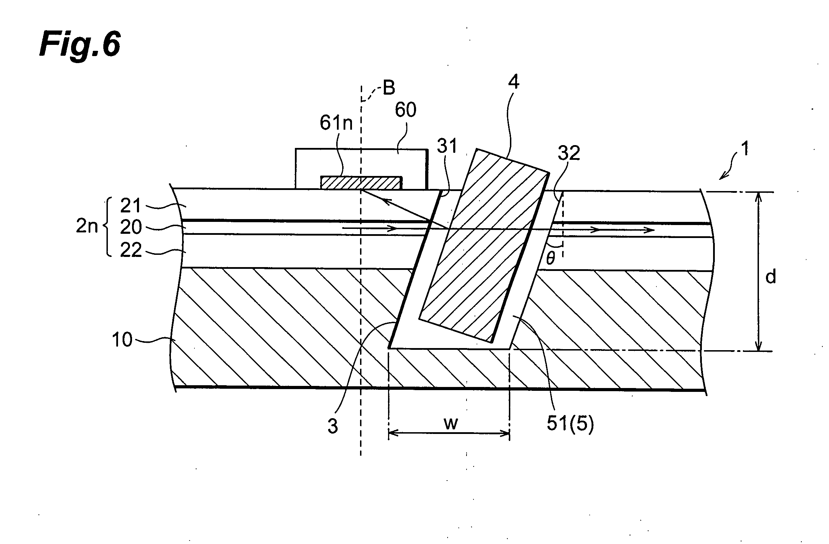

Fig. 6 is a cross section of the structure of the optical waveguide module shown in Fig. 5, cut along the optical axis of the optical waveguides 2ₙ (n = 1 to 8). In Fig. 6, the portion including the groove 3, the reflection filter 4, and the photodetector array 60 is shown enlarged. In the configuration shown in Fig. 6, the reflection filter 4, the groove 3, and the planar waveguide optical circuit 1 including the optical waveguides 2ₙ comprising the lower cladding 22, the core 20, and the upper cladding 21 are configured the same as in Fig. 2.

The inside of the groove 3, including the reflection filter 4, is sealed with the filler resin 5. The filler resin 5 used in this embodiment is composed of only the inner filler resin 51 that seals the inside of the groove 3.

The photodetector array 60, which has photodetectors 61ₙ (n = 1 to 8) corresponding to the optical waveguide 2ₙ, is installed on the top side of the upper cladding 21 of the planar waveguide optical circuit 1. The photodetector array 60 is disposed such that the reflected light obtained when part of the signal light transmitted through the optical waveguide 2ₙ is reflected by the reflection filter 4 will be incident on the light receiving area of the corresponding photodetector 61ₙ. Because of the incident direction of the reflected light, it is preferable for the photodetectors 61ₙ to be a rear incidence type of photodiode or the like. An antireflective coating may also be provided at the interface between the photodetectors 61ₙ and the upper cladding 21 of the optical waveguides 2ₙ.

With the above structure, when the signal light transmitted through an optical waveguide 2ₙ is emitted through the upstream end face 31 to the inner filler resin 51 inside the groove 3, the reflection filter 4, which is inclined with respect to the optical axis, reflects part of this signal light diagonally above the planar waveguide optical circuit 1 at a specific reflectivity that has undergone polarization compensation so as to be equal with respect to respective polarization states. The rest of the signal light passes through the inner filler resin 51 and the reflection filter 4, and is again incident on the optical waveguide 2ₙ via the downstream end. face 32.

Meanwhile, the light reflected by the reflection filter 4 is incident on the photodetector 61ₙ via the inner filler resin 51 and the optical waveguide 2ₙ. The optical intensity of the signal light transmitted through the optical waveguide 2ₙ is monitored on the basis of the optical intensity of the reflected light detected by the photodetector 61ₙ.

With the optical waveguide module in this embodiment, just as with the first embodiment, part of the signal light is reflected in the inclined groove 3 provided so as to cut across the respective optical waveguides 2ₙ, and used for monitoring the optical intensity. This simplifies the structure of the optical circuit of an optical waveguide module with which the optical intensity can be monitored. Also, there is no need to install extra optical components, fuse the optical waveguides together, and so forth, so the manufacturing process is similarly simplified.

Also, since part of the signal light is reflected by the reflection filter 4, which has undergone polarization compensation so that the reflectivity between the orthogonal polarization will be substantially equal, the optical intensity of the reflectedlight detected by the photodetector 61ₙ can be used to accurately monitor the optical intensity regardless of the polarization state of the signal light. Further, since the inside of the groove 3 including the reflectionfilter 4 is sealed by the filler resin 5, the end faces 31 and 32 of the groove 3, the reflection filter 4, and so forth do not come into contact with the outside atmosphere, any deterioration in long-term stability that would otherwise be caused by contamination of these components is prevented.

Moreover, the light path isolation means is provided to the reflected light.paths from the reflection filter 4 to the photodetectors 61₁ to 61₈ for isolating the reflected light paths from each other between each of the eight reflected light paths. This effectively prevents the generation of crosstalk between adjacent channels.

If, as in the above first and second embodiments, the planar waveguide optical circuit 1 has N number (N is a plurality; N = 8 in the above embodiments) of optical waveguides and the optical intensity is monitored for N channels of signal light transmitted through these respective optical waveguides, then N number of photodetectors are installed corresponding to the respective optical waveguides. The N channels of signal light reflected by the reflection filter will propagate through the respective reflected light paths and be detected by the corresponding photodetectors, and as a result the optical intensity of each channel of signal light will be monitored.

Here, the signal light from the optical waveguides reflected by the reflection filter is detected by the corresponding photodetectors, but in some cases light scattering or reflection produced at various locations of the device, the spreading of the transmitted light, and so forth may cause part of the light to be incident on photodetectors of other adjacent channels, resulting in crosstalk. If crosstalk thus occurs between adjacent channels, the optical intensity of the signal light of those channels cannot be monitored accurately.

There are a number of possible causes of crosstalk between channels. For instance, with the structure shown in Fig. 2 or 6, possible causes of crosstalk include scattered reflection at the interface between the filler resin 5 and the various parts of the planar waveguide optical circuit 1, scattering caused by defects at the top surface of the upper cladding 21, etc., and reflected light and scattered light caused by scattered reflection at the interface between the substrate 10 and the lower cladding 22.

The signal light transmitted through an optical waveguide mainly propagates through the core, but part of the signal light spreads out and also propagates through the upper and lower cladding near the core. If there is too much spreading of the signal light to the cladding, the reflected light path from the reflection filter to the photodetector can spread out excessively, unnecessary scattered light can be generated within the optical waveguide or elsewhere, and so on, all of which can cause crosstalk.

This spreading of the signal light to the cladding also occurs, for example, as a result of misalignment of the optical fibers used for inputting the signal light, connected to the input end of the planar waveguide optical circuit, with respect to the optical waveguides. Specifically, if an optical fiber is connected at a location away from the core of the optical waveguide, the inputted signal light will propagate through the cladding and other components that do not have a waveguide structure.

In the second embodiment, in which this problem of crosstalk between channels was handled by directly installing the photodetector array 60 on the top side of the planar waveguide optical circuit 1, without providing a sub-mounting substrate or the like, the reflected light path from the reflection filter 4 to the photodetector 61ₙ is shorter and the spreading of reflected light can be reduced, as shown in Fig. 6. Also reduced is the effect of scattered reflection or scattering at the interface or on the inside of the optical waveguides 2ₙ or filler resin 5. Therefore, crosstalk between the channels is suppressed.

Also, enhancing the confinement of the signal light within the core 20 with respect to the signal light transmitted through the optical waveguides 2ₙ is preferable in terms of preventing crosstalk in both the first and second.embodiments. In specific terms, the refractive index differential Δn between the core 20 and the cladding 21 and 22 should be increased. This decreases the spreading of the signal light transmitted through the core 20 into the cladding 21 and 22. Because of the high refractive index of the core, an effect of confining the light inside the core will also be achieved for the signal light component that leaks into the cladding due to misalignment of an optical fiber, etc.

As an example, with the structure shown in Fig. 6, when an optical fiber was connected in a state in which the fiber was misaligned by being offset by 2 µm from the core of an optical waveguide with a core size of 8.5 µm square, and a refractive index differential Δn of 0.3% between the core 20 and the cladding 21 and 22, crosstalk worsened to -22 dB. In contrast, when the refractive index differential Δn was raised from 0.3% to 0.45%, crosstalk improved to a level of < -25 dB.

We will now describe a method for manufacturing a planar waveguide optical circuit when the refractive index differential Δn between the core and cladding is thus increased. The core and the upper cladding (overcladding) are formed, for example, by using an SiO₂ (quartz) glass micropowder to which the respective required additives have been added, depositing this powder by flame hydrolysis deposition (FHD) method, and sintering.

More specifically, the core can be germanium(Ge)-added SiO₂ glass, and the upper cladding can be boron/phosphorus(B/P)-added SiO₂ glass, for example. The germanium, boron, phosphorus, and SiO₂ are obtained in the form of soot-like micropowders by hydrolyzing GeCl₄, BCl₃, POCl₃, and SiCl₄, respectively, in an oxyhydrogen burner. The refractive index differential Δn is adjusted by adjusting the amount of germanium added to the core and the amounts of boron and phosphorus added to the upper cladding.

For instance, the amount of germanium added to the core is typically about 3.2 wt% Ge concentration when Δn = 0.3%, and about 4.6 wt% Ge concentration when Δn = 0.45%. The amounts of boron and phosphorus added to the upper cladding are determined by the sooting conditions, etc., but are adjusted so that the amount of added phosphorus, which increases the refractive index, will be balanced with the amount of added boron, which decreases the refractive index, and the refractive index will be equivalent to that of pure SiO₂ glass. The above method yields optical waveguides with a refractive index differential Δn between the core and the upper cladding of 0.3% and 0.45%.

In addition to enhancing the effect of confining the light within the core, as described briefly in the first and second embodiments, providing a light path isolation means between the light paths is also an effective way to deal with the above-mentioned problem of crosstalk between channels. Specifically, providing light path isolation means between adjacent reflected light paths almost completely prevents crosstalk from occurring between adjacent channels. As a result, the optical intensity of the N channels of signal light transmitted through the respective optical waveguides can be monitored more accurately.

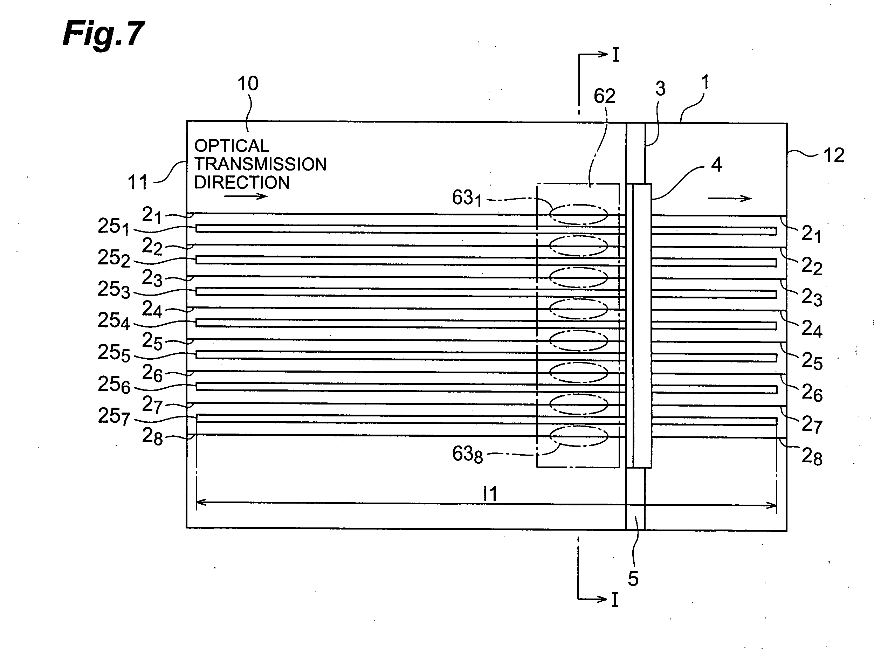

Fig. 7 is a plan view of the structure in the third embodiment of the optical waveguide module. Just as with the first embodiment, this optical waveguide. module comprises a planar waveguide optical circuit 1 having a substrate 10 and eight (eight channels) planar waveguide type of optical waveguides 2₁ to 2₈ formed on the substrate 10.

The optical waveguides 2₁ to 2₈ are formed parallel to each other and equidistantly, extending from an input end 11 of the planar waveguide optical circuit 1 to an output end 12 in a predetermined optical transmission direction (the direction indicated by the arrow in Fig. 7). A groove 3 that cuts across the optical waveguides 2₁ to 2₈ is provided at a specific location with respect to the optical transmission direction of the planar waveguide optical circuit 1.

On the inside of this groove 3 is installed a reflection filter 4 for reflecting part of the signal light transmitted through the respective optical waveguides 2₁ to 2₈, with the reflection filter 4 being sealed in the groove 3 by a filler resin 5. A photodetector array 62 having eight photodetectors 63₁ to 63₈ corresponding to the optical waveguides 2₁ to 2₈ is installed above the planar waveguide optical circuit 1 at a location further upstream than the groove 3.

In Fig. 7, one-dot chain lines indicate the photodetector array 62 and the photodetectors 63₁ to 63₈ in order to illustrate the positional relationship between the photodetector array 62 and the various components, and to show the planar waveguide optical circuit 1 in a state in which the photodetector array 62 has been removed.

In this embodiment, a light path isolation means for isolating reflected light paths is provided within the planar waveguide optical circuit 1 in between each of the eight reflected light paths along which part of the signal light transmitted through the eight channels of optical waveguides 2₁ to 2₈ is reflected by the reflection filter 4 to the corresponding photodetectors 63₁ to 63₈. This light path isolation means serves to suppress the generation of crosstalk between adjacent channels.

In specific terms, in this embodiment a light blocking layer 25 is provided between each of the eight optical waveguides 2₁ to 2₈ so as to block light from passing from one reflected light path into an adjacent reflected light path within the planar waveguide optical circuit 1.

Specifically, light blocking layers 25₁, 25₂, 25₃, 25₄, 25₅, 25₆, and 25₇ are respectively provided between the optical waveguides 2₁ and 2₂, between the optical waveguides 2₂ and 2₃, between the optical waveguides 2₃ and 2₄, between the optical waveguides 2₄ and 2₅, between the optical waveguides 2₅ and 2₆, between the optical waveguides 2₆ and 2₇, and between the optical waveguides 2₇ and 2₈.

Other than the.above-mentioned light blocking layers 25₁ to 25₇ being provided to the planar waveguide optical circuit 1, the structure of the optical waveguide module in this third embodiment is the same as that in the second embodiment shown in Figs. 5 and 6.

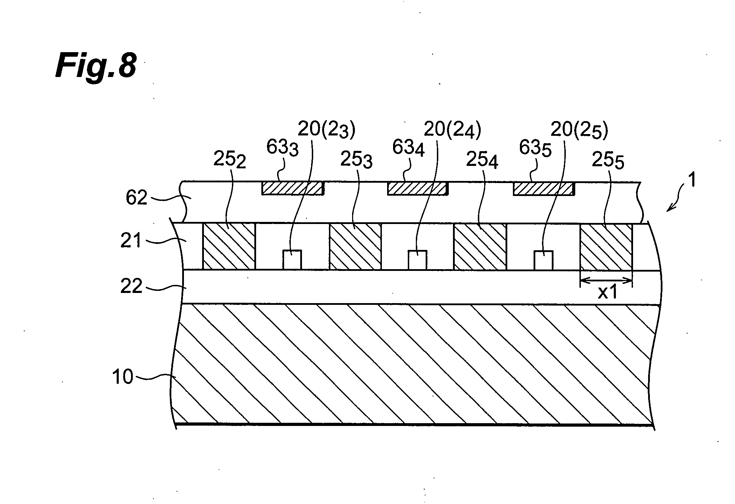

Fig. 8 is a cross section of the structure of the optical waveguide module shown in Fig. 7, cut along the I-I line perpendicular to the optical axis of the optical waveguides 2ₙ (n = 1 to 8). In Fig. 8, the portion including the optical waveguides 2₃ to 2₅, the light blocking layers 25₂ to 25₅, and the photodetectors 633.to 63₅ is shown enlarged, with the cross section passing through the centers of the photodetectors 63₃ to 63₅ (see cross section location B indicated by the dotted line in Fig. 6).

As shown in Fig. 8, the planar waveguide optical circuit 1 comprises the lower cladding 22 formed on the substrate 10, eight cores 20 corresponding to the optical waveguides 2₁ to 2₈ formed in parallel and equidistantly spayed on the lower cladding 22, and the upper cladding 21 formed so as to cover all eight of the cores 20 (the optical waveguides 2₁ to 2₈). The photodetector array 62 including the photodetectors 63₁ to 63₈ is disposed above the upper cladding 21.

In this embodiment, the upper cladding 21 is removed from between the optical waveguides 2₁ to 2₈ in specific widths of x1, and the light blocking layers 25₁ to 25₇ for blocking light are provided in the places where the upper cladding 21 has been removed. As shown in Fig. 7, these light blocking layers 25₁ to 25₇ are formed over a specific length 11 spanning the groove 3.

In the above structure, if we turn our attention to the fourth channel of signal light transmitted through optical waveguide 2₄, we see that when the signal light transmitted through optical waveguide 2₄ is incident on the inner filler resin 51 in the groove 3 via the upstream end face 31 (see Fig. 6), the reflection filter 4, which is inclined with respect to the optical axis, reflects part of this signal light diagonally above the planar waveguide optical circuit 1 at a specific reflectivity that has undergone polarization compensation so as to be equal with respect to respective polarization states. The rest of the signal light passes through the inner filler resin 51 and the reflection filter 4, and is again incident on the optical waveguide 2₄ via the downstream end face 32.

Meanwhile, the light reflected by the reflection filter 4 is incident on the photodetector 63₄ via the inner filler resin 51 and the optical waveguide 2₄. The optical intensity of the fourth channel of signal light transmitted through the optical waveguide 2₄ is monitored on the basis of the optical intensity of the reflected light detected by the photodetector 63₄.

The light blocking layer 25₃ is provided inside the upper cladding 21 on the side with the optical waveguide 2₃ and the photodetector 63₃, as viewed from the optical waveguide 2₄. Of the signal light transmitted, through the optical waveguide 2₄, any light that propagates to the adjacent photodetector 63₃ as a result of light scattering or reflection, the spreading of transmitted light, etc., is blocked by this light blocking layer 25₃, and this prevents crosstalk between the third and fourth channels.

Also, the light blocking layer 25₄ is provided inside the upper cladding 21 on the side with the optical waveguide 2₅ and the photodetector 63₅, as viewed from the optical waveguide 2₄. Of the signal light transmitted through the optical waveguide 2₄, any. light that propagates to the adjacent photodetector 63₅ as a result of light scattering or reflection, the spreading of transmitted light, etc., is blocked by this light blocking layer 25₄, and this prevents crosstalk between the fourth and fifth channels.

In this embodiment, light blocking layers 25₁ to 25₇ are provided to the reflected light paths from the reflection filter 4 to the photodetectors 63₁ to 63₈ as light path isolation means for isolating the reflected light paths from each other within the planar waveguide optical circuit 1. As mentioned above, this effectively prevents the generation of crosstalk between adjacent channels.

It is preferable for the light blocking layers 25₁ to 25₇ provided within the planar waveguide optical circuit 1 to be a light blocking material having the effect of blocking light by absorbing, reflecting, or scattering light of the signal light wavelength, or the like. In specific terms, glass containing a high concentration of an additive having a light absorption effect, such as germanium, can be used, for example, as the light blocking material.

As shown in Figs. 7 and 8, the light blocking layers 25₁ to 25₇ can be formed, for example, by a method in which seven grooves, each with a width of x1 and a length of 11, are formed substantially parallel to the optical waveguides and spanning the groove 3 between the eight optical waveguides 2₁ to 2₈, and the insides of these grooves are filled with a light blocking material. The width x1 and length 11 of the light blocking layers 25₁ to 25₇ are preferably set such that the reflected light paths from the reflection filter 4 to the photodetectors 63ₙ are not too narrow, and the light blocking effect can be sufficiently realized between adjacent channels. Alternatively, a light blocking layer can be provided over everything from the input end 11 to the output end 12 of the planar waveguide optical circuit 1.

As an example, in a state in which crosstalk has worsened to -22 dB, providing a light blocking layer within the upper cladding of the planar waveguide optical circuit as discussed above improves the crosstalk to a level of < -30 dB. Since the conduction of scattered light will be somewhat suppressed even when the inside of the light blocking layer is not filled with anything, an improvement in crosstalk will be obtained in this case as well, with the -22 dB improving to -28 dB, for instance.

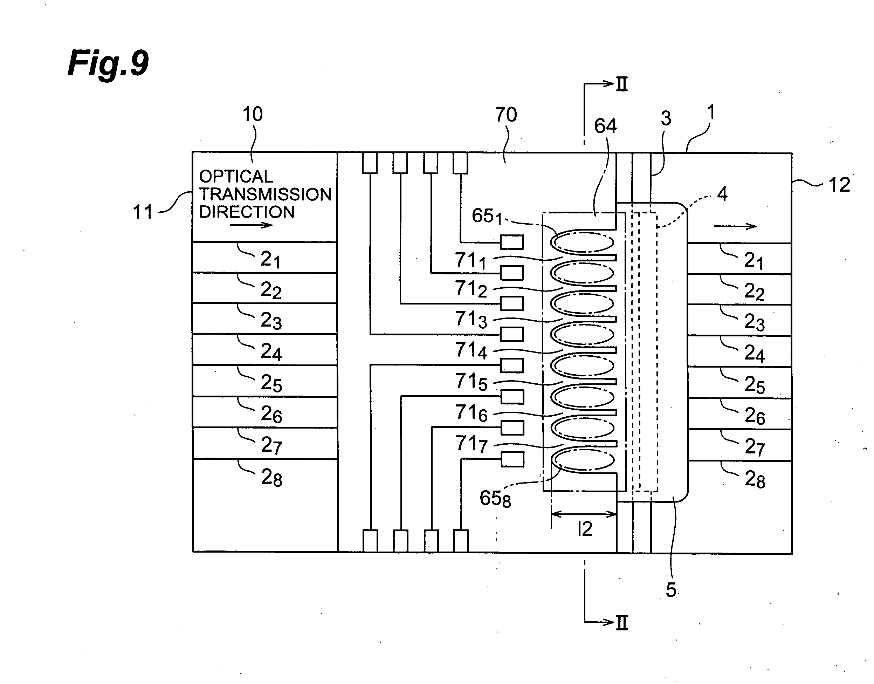

Fig. 9 is a plan view of the structure in the fourth embodiment of the optical waveguide module. Just as with the first embodiment, this optical . waveguide module comprises a planar waveguide optical circuit 1 having a substrate 10 and eight (eight channels) planar waveguide type of optical waveguides 2₁ to 2₈ formed on the substrate 10.

The optical waveguides 2₁ to 2₈ are formed parallel to each other and equidistantly, extending from an input end 11 of the planar waveguide optical. circuit 1 to an output end 12 in a specific optical transmission direction (the direction indicated by the arrow in Fig. 9). A groove 3 that cuts across the optical waveguides 2₁ to 2₈ is provided at a specific location with respect to the optical transmission direction of the planar waveguide optical circuit 1.

On the inside of this groove 3 is installed a reflection filter 4 for reflecting part of the signal light transmitted through the respective optical waveguides 2₁ to 2₈, with the reflection filter 4 being sealed in the groove.3 by a filler resin 5. A sub-mounting substrate 70 is installed above the planar waveguide optical circuit 1 at a location further upstream than the groove 3, and a photodetector array 64 having eight photodetectors 65₁ to 65₈ corresponding to the optical waveguides 2₁ to 2₈ is installed above the sub-mounting substrate 70 and the filler resin 5.

In .Fig. 9, one-dot chain lines indicate the photodetector array 64 and the photodetectors 65₁ to 65₈ in order to illustrate the positional relationship between the photodetector array 64 and the various components, and to show the planar waveguide optical circuit 1, the sub-mounting substrate 70, and so forth in a state in which the photodetector array 64 has been removed. The sub-mounting substrate 70 is a mounting member for mounting the photodetector array 64, and on its top surface are formed wiring, electrodes, etc., for reading out the photodetection signals from the photodetectors 65₁ to 65₈, as shown schematically in Fig. 9.

In this embodiment, a light path isolation means for isolating reflected light paths is provided within the filler resin 5 in between each of the eight reflected light paths along which part of the signal light transmitted through the eight channels of optical waveguides 2₁ to 2₈ is reflected by the reflection filter 4 to the corresponding photodetectors 65₁ to 65₈. This light path isolation means serves to suppress the generation of crosstalk between adjacent channels.

In specific terms, in this embodiment the filler resin 5 is installed so as to seal not only the inside of the groove 3, but also a specific portion of the top surface of the planar waveguide optical circuit 1 including the upper part of the groove. Light blocking components 71₁ to 71₇ that protrude like the teeth of a comb into the upper filler resin, which seals the top surface of the planar waveguide optical circuit 1, are provided to the sub-mounting substrate 70 located on the upstream side of this upper filler resin.

Specifically, with respect to the optical waveguides 2₁ through 2₈ located within the planar waveguide optical circuit 1, light blocking components 71₁, 71₂, 71₃, 71₄, 71₅, 71₆, and 71₇ are respectively provided between the optical waveguides 2₁ and 2₂, between the optical waveguides 2₂ and 2₃, between the optical waveguides 2₃ and 2₄, between the optical waveguides 2₄ and 2₅, between the optical waveguides 2₅ and 2₆, between the optical waveguides 2₆ and 2₇, and between the optical waveguides 2₇ and 2₈.

Other than the above-mentioned light blocking components 71₁ to 71₇ being provided to the sub-mounting substrate 70, the structure of the optical waveguide module in this fourth embodiment is the same as that in the first embodiment shown in Figs. 1 and 2.

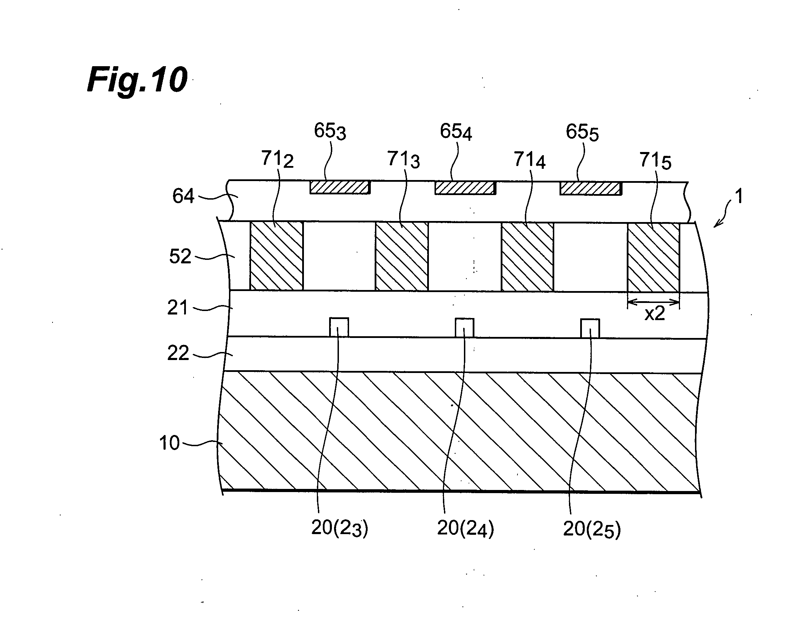

Fig. 10 is a cross section of the structure of the optical waveguide module shown in Fig. 9, cut along the II-II line perpendicular to the optical axis of the optical waveguides 2ₙ (n = 1 to 8). In Fig. 10, the portion including the optical waveguides 2₃ to 2₅, the light blocking components 71₂ to 71₅, and the photodetectors 65₃ to 65₅ is shown enlarged, with the cross section passing through the centers of the photodetectors 65₃ to 65₅ (see cross section location A indicated by the dotted line in Fig. 2).

As shown in Fig. 10, the planar waveguide optical circuit 1 comprises the lower cladding 22 formed on the substrate 10, eight cores 20 corresponding to the optical waveguides 2₁ to 2₈ formed in parallel and equidistantly spaced on the lower cladding 22, and the upper cladding 21 formed so as to cover all eight of the cores 20 (the optical waveguides 2₁ to 2₈).

The upper filler resin 52, which is the portion of the filler resin 5 that seals a specific portion of the top surface of the planar waveguide optical circuit 1, is provided to the top side of the upper cladding 21 (see Fig. 2). This upper filler resin 52 is substantially the same height as the sub-mounting substrate 70. The photodetector array 64 including the photodetectors 65₁ to 65₈ is disposed above the upper filler resin 52 and the sub-mounting substrate 70. The portion under the photodetectors 65₁ to 65₈ of the photodetector array 64 is the upper filler resin 52, through which light from the reflection filter 4 is able to pass.

In this embodiment, the comb-like light blocking components 71₁ to 71₇, which are formed at a specific width of x2 at the end faces of the sub-mounting substrate 70 that come into contact with the upper filler resin 52, are provided to the upper filler resin 52 at locations corresponding to between the optical waveguides 2₁ to 2₈ (between the photodetectors 65₁ to 65₈). The light blocking components 71₁ to 71₇ are designed to protrude into the upper filler resin 52, which is downstream of the sub-mounting substrate 70. These light blocking components 71₁ to 71₇ are formed over a specific length 12, as shown in Fig. 9.

In the above structure, if we turn our attention to the fourth channel of signal light transmitted through optical waveguide 2₄, we see .that when the signal light transmitted through optical waveguide 2₄ is incident on the inner filler resin 51 in the groove 3 via the upstream end face 31 (see Fig. 2), the reflection filter 4, which is inclined with respect to the optical axis, reflects part of this signal light diagonally above the planar waveguide optical circuit 1 at a specific reflectivity that has undergone polarization compensation so as to be equal with respect to respective polarization states. The rest of the signal light passes through the inner filler resin 51 and the reflection filter 4, and is again incident on the optical waveguide 2₄ via the downstream end face 32.

Meanwhile, the light reflected by the reflection filter 4 is incident on the photodetector 65₄ via the inner filler resin 51, the optical waveguide 2₄, and the upper filler resin 52. The optical intensity of the fourth channel of signal light transmitted through the optical waveguide 2₄ is monitored on the basis of the optical intensity of the reflected light detected by the photodetector 65₄.

The light blocking component 71₃ is provided inside the upper filler resin 52 on the side with the optical waveguide 2₃ and the photodetector 65₃, as viewed from the optical waveguide 2₄. Of the signal light transmitted through the optical waveguide 2₄, any light that propagates to the adjacent photodetector 65₃ as a result of light scattering or reflection, the spreading of transmitted light, etc., is blocked by this light blocking component 71₃, and this prevents crosstalk between the third and fourth channels.

Also, the light blocking component 71₄ is provided inside the upper filler, resin 52 on the side with the optical waveguide 2₅ and the photodetector 65₅, as viewed from the optical waveguide 2₄. Of the signal light transmitted through the optical waveguide 2₄, any light that propagates to the adjacent photodetector 65₅ as a result of light scattering or reflection, the spreading of transmitted light, etc., is blocked by this light- blocking component 71₄, and this prevents crosstalk between the fourth and fifth channels.

In this embodiment, light blocking components 71₁ to 71₇ are provided to the reflected light paths from the reflection filter 4 to the photodetectors 65₁ to 658 inside the upper filler resin 52 of the filler resin 5 as light path isolation means for isolating the reflected light paths from each other. As mentioned above, this effectively prevents the generation of crosstalk between adjacent channels.

It is preferable for the light blocking components 71₁ to 71₇ provided to the sub-mounting substrate 70 so as to protrude into the filler resin 5 to be a light blocking material having the effect of blocking light by absorbing, reflecting, or scattering light of the signal light wavelength, or the like. In specific terms, alumina can be used, for example, as the light blocking material.

When the light blocking components 71₁ to 71₇ are formed integrally with the sub-mounting substrate 70 as mentioned above, the sub-mounting substrate 70 itself is formed from a light blocking material, for example. The width x2 and length 12 of the light blocking components 71₁ to 71₇ are preferably set such that the reflected light paths from the reflection filter 4 to the photodetectors 65ₙ are not too narrow, and the light blocking effect can be sufficiently realized between adjacent channels.

As an example, in a state in which crosstalk has worsened to -22 dB, providing light blocking components within the upper filler resin of the filler resin as' discussed above improves the crosstalk to a level of < -23 dB.

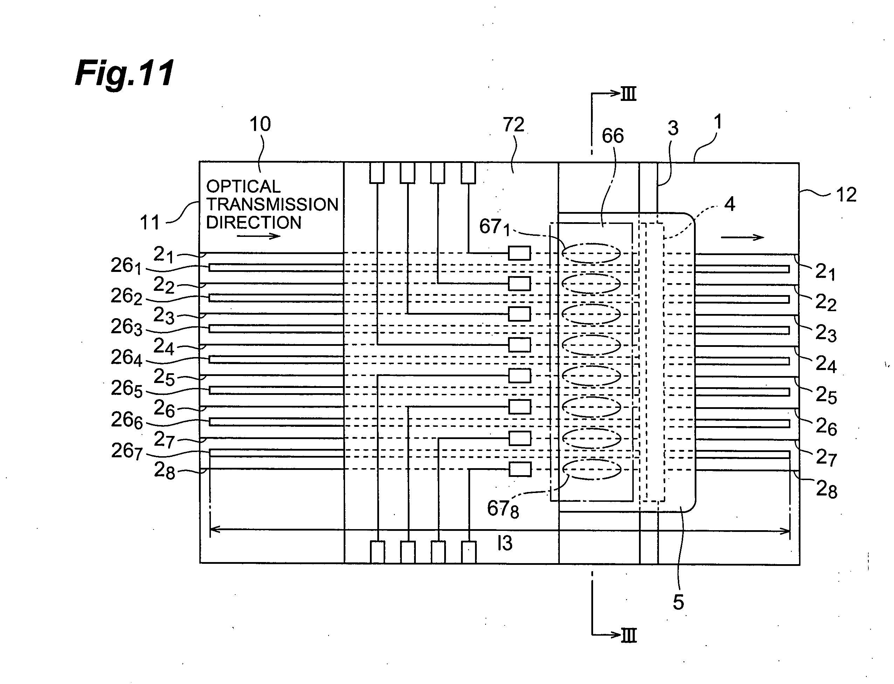

Fig. 11 is a plan view of the structure in the fifth embodiment of the optical waveguide module. Just as with the first embodiment, this optical waveguide module comprises a planar waveguide optical circuit 1 having a substrate 10 and eight (eight channels) planar waveguide type of optical waveguides 2₁ to 2₈ formed on the substrate 10.

The optical waveguides 2₁ to 2₈ are formed parallel to each other and equidistantly, extending from an input end 11 of the planar waveguide optical circuit 1 to an output end 12 in a specific optical transmission direction (the direction indicated by the arrow in Fig. 11). A groove 3 that cuts across the optical waveguides 2₁ to 2₈ is provided at a specific location with respect to the optical transmission direction of the planar waveguide optical circuit 1.

On the inside of this groove 3 is installed a reflection filter 4 for reflecting part of the signal light transmitted through the respective optical waveguides- 2₁ to 2₈, with the reflection filter 4 being sealed in the groove. 3 by a filler resin 5. A submounting substrate 72 is installed above the planar waveguide optical circuit 1 at a location further upstream than the groove 3, and a photodetector array 66 having eight photodetectors 67₁ to 67₈ corresponding to the optical waveguides 2₁ to 2₈ is installed above the sub-mounting substrate 72 and the filler resin 5.

In Fig. 11, one-dot chain lines indicate the photodetector array 66 and the photodetectors 67₁ to 67₈ in order to illustrate the positional relationship between the photodetector array.66 and the various components, and to show the planar waveguide optical circuit 1, the sub-mounting substrate 72, and so forth in a state in which the photodetector array 66 has been removed. The sub-mounting substrate 72 is a mounting member for mounting the photodetector array 66, and on its top surface are formed wiring, electrodes, etc., for reading out the photodetection signals from the photodetectors 67₁ to 67₈, as shown schematically in Fig. 11.

In this embodiment, a light path isolation means for isolating reflected light paths is provided within the planar waveguide optical circuit 1 in between each of the eight reflected light paths along which part of the signal light transmitted through the eight channels of optical- waveguides 2₁ to 2₈ is reflected by the reflection filter 4 to the corresponding photodetectors 67₁ to 67₈. This light path isolation means serves to suppress the generation of crosstalk between adjacent channels.

In specific terms, in this embodiment a light blocking layer 26 is provided between each of the eight optical waveguides 2₁ to 2₈ so as to block light from passing from one reflected light path into an adjacent reflected light path within the planar waveguide optical circuit 1.

Specifically, light blocking layers 26₁, 26₂, 26₃, 26₄, 26₅, 26₆, and 26₇ are respectively provided between the optical waveguides 2₁ and 2₂, between the optical waveguides 2₂ and 2₃, between the optical waveguides 2₃ and 2₄, between the optical waveguides 2₄ and 2₅, be'tween the optical waveguides 2₅ and 2₆, between the optical waveguides 2₆ and 2₇, and between the optical waveguides 2₇ and 2₈.

Other than the above-mentioned light blocking layers 26₁ to 26₇ being provided to the planar waveguide optical circuit 1, the structure of the optical waveguide module in this fifth embodiment is the same as that in the first embodiment shown in Figs. 1 and 2.

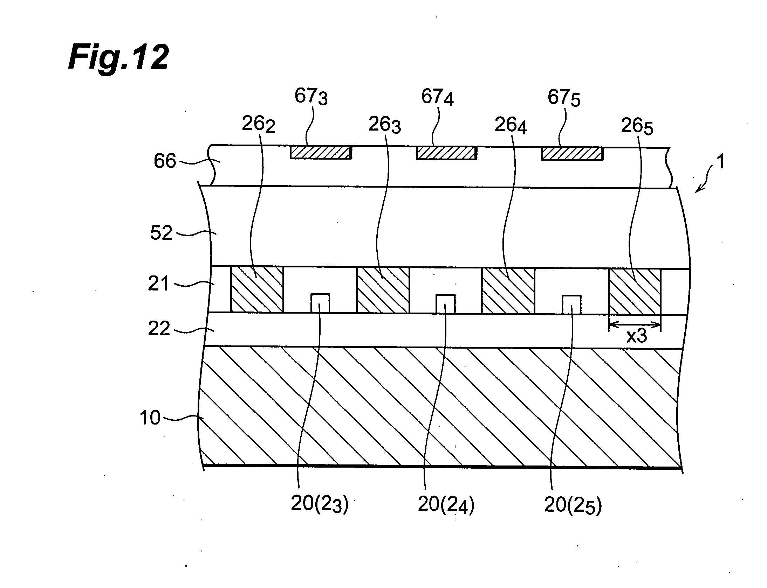

Fig. 12 is a cross section of the structure of the optical waveguide module shown in Fig. 11, cut along the III-III line perpendicular to the optical axis of the optical waveguides 2ₙ (n = 1 to 8). In Fig. 12, the portion including the optical waveguides 2₃ to 2₅, the light blocking layers 26₂ to 26₅, and the photodetectors 67₃ to 67₅ is shown enlarged, with the cross section passing through the centers of the photodetectors 673 to 67₅ (see cross section location A indicated by the dotted line in Fig. 2).

As shown in Fig. 12, the planar waveguide optical circuit 1 comprises the lower cladding 22 formed on the substrate 10, eight cores 20 corresponding to the optical waveguides 2₁ to 2₈ formed in parallel and equidistantly spaced on the lower cladding 22, and the upper cladding 21 formed so as to cover all eight of the cores 20 (the optical waveguides 2₁ to 2₈).

The upper filler resin 52, which is the portion of the filler resin 5 that seals a specific portion of the top surface of the planar waveguide optical circuit 1, is provided to the top side of the upper cladding 21 (see Fig. 2). This upper filler resin 52 is substantially the same height as the sub-mounting substrate 72. The photodetector array 66 including the photodetectors 67₁. to 67₈ is disposed above the upper 'filler resin 52 and the sub-mounting substrate 72. The portion under the photodetectors 67₁ to 67₈ of the photodetector array 66 is the upper filler resin. 52, through which light from the reflection filter 4 is able to pass.

In this embodiment, the upper cladding 21 is removed from between the optical waveguides 2₁ to 2₈ in specific widths of x3, and the light blocking layers 26₁ to 26₇ are provided in the places where the upper cladding 21 has been removed. As shown in Fig. 11, these light blocking layers 26₁ to 26₇ are formed over a specific length 13 spanning the groove 3.

In the above structure, if we turn our attention to the fourth channel of signal light transmitted through optical waveguide 2₄, we see that when the signal light transmitted through optical waveguide 2₄ is incident on the inner filler resin 51 in the groove 3 via the upstream end face 31 (see Fig. 2), the reflection filter 4, which is inclined with respect to the optical axis, reflects part of this signal light diagonally above the planar waveguide optical circuit 1 at a specific reflectivity that has undergone polarization compensation so as to be equal with respect to respective polarization states. The rest of the signal light passes through the inner filler resin 51 and the reflection filter 4, and is again incident on the optical waveguide 2₄ via the downstream end face 32.

Meanwhile, the light reflected by the reflection filter 4 is incident on the photodetector 67₄ via the inner filler resin 51, the optical waveguide 2₄, and the upper filler resin 52. The optical intensity of the fourth channel of signal light transmitted through the optical waveguide 2₄ is monitored on the basis of the optical intensity of the reflected light detected by the photodetector 67₄.

The light blocking layer 26₃ is provided inside the upper cladding 21 on the side with the optical waveguide 2₃ and the photodetector 67₃, as viewed from the optical waveguide 2₄. Of the signal light transmitted through the optical waveguide 24, any light that propagates to the adjacent photodetector 67₃ as a result of light scattering or reflection, the spreading of transmitted light, etc., is blocked by this light blocking layer 26₃, and this prevents crosstalk between the third and fourth channels.

Also, the light blocking layer 26₄ is provided inside the upper cladding 21 on the side with the optical waveguide 2₅ and the photodetector 67₅, as viewed from the optical waveguide 2₄. Of the signal light transmitted through the optical waveguide 2₄, any light that propagates to the adjacent photodetector 67₅ as a result of light scattering or reflection, the spreading of transmitted light, etc., is blocked by this light- blocking layer 26₄, and this prevents crosstalk between the fourth and fifth channels.

In this embodiment, just as the light blocking layers 25₁ to 25₇ in the third embodiment shown in Figs. 7 and 8, light blocking layers 26₁ to 26₇ are provided to the reflected light paths from the reflection filter 4 to the photodetectors 67₁ to 67₈ as light path isolation means for isolating the reflected light paths from each other within the planar waveguide optical circuit 1. As mentioned above, this effectively prevents the generation of crosstalk between adjacent channels.

With this structure, in which the upper filler resin 52 is provided by filling the space between the photodetector array 66 and the upper cladding 21 of the optical waveguides 2₁ to 2₈ with a resin, even if bumps or the like are on the surface of the upper cladding 21, any light scattering or scattered reflection caused by these is suppressed.

As an example, in a state in which crosstalk has worsened to -20 dB, providing a light blocking layer within the upper cladding of the planar waveguide optical circuit as discussed above improves the crosstalk to a level of < -28 dB.

The optical waveguide module of the present invention is not limited to the embodiments and examples given above, and a variety of variations is possible. For instance, the polarization compensation of the difference in reflectivity at the reflection filter 4 involves compensating for the difference in reflectivity at the reflection filter 4 itself, but if it is known in advance that polarization dependence will be caused by reflection, etc., at the interfaces of the optical waveguides 2ₙ, the filler resin 5, and the photodetectors 6ₙ, the reflection filter 4 may also be constituted with reflectivity that compensates for these as well.

Also, the light path isolation means for preventing crosstalk between adjacent channels is not limited to the structure discussed above, and various other structures may be employed instead. For example, when a light blocking member is provided inside the filler resin, it may be a separate member from the sub-mounting substrate, or a light blocking member may be provided inside the inner filler resin. Alternatively, a light blocking member provided inside the upper cladding may be used together with a light blocking member provided inside the filler resin, for instance, thereby further reducing crosstalk.

As described in detail above, the optical waveguide module according to the present invention offers the following effects. With an optical waveguide module structured for use in monitoring optical intensity, in which an inclined groove is formed cutting across optical waveguides and part of the signal light is reflected by a reflection filter installed inside this groove, the structure and. manufacturing process of the optical circuit are simplified. Also, using a reflection filter that has undergone polarization compensation so that the reflectivity is equalized between orthogonal polarization makes it possible to monitor optical intensity accurately regardless of the polarization state of the signal light. Further, since the inside of the groove including the reflection filter is sealed with a filler resin, any deterioration in long-term stability that would otherwise be caused by contamination of these components is prevented.

Also, crosstalk can be minimized between adjacent channels by providing light path isolation means between N number of adjacent reflected light paths through which N channels of signal light reflected by the reflection filter propagate to photodetectors. This makes it possible to accurately monitor the optical intensity in each channel for N channels of signal light transmitted through the respective optical waveguides.

An optical waveguide module such as this can be used as a signal light intensity monitor that is inserted into an optical circuit consisting of optical fibers or planar optical waveguides. Alternatively, if this optical waveguide module is provided at the required location in a planar waveguide optical circuit of a optical coupler, optical splitter, optical attenuator, or the like, it will be able to monitor the signal light intensity in the optical circuit.

From the invention thus described, it will be obvious that the invention may be varied in many ways. Such variations are not to be regarded as a departure from the spirit and scope of the invention, and all such modifications as would be obvious to one skilled in the art are intended for inclusion within the scope of the following claims.

## Claims

1. An optical waveguide module, **characterized by** comprising:
a planar waveguide optical circuit, constituted by a substrate and a planar waveguide type of optical waveguide formed on said substrate, and having a groove formed at a predetermined inclination angle θ (0° < θ) with respect to the vertical axis perpendicular to the optical axis of said optical waveguide so as to cross a specific area of said optical waveguide;
a reflection filter that is installed on the inside of said groove of said planar waveguide optical circuit, including a portion where signal light transmitted through the optical waveguide passes through, and that reflects part of said signal light according to a specific reflectivity in which the difference in reflectivity between the orthogonal polarization has been compensated;
a filler resin installed so as to seal at least the inside of said groove; and
a pho-todetector that detects reflected light of the signal light reflected by said reflection filter;
wherein N number (N is a plurality) of optical waveguides are provided as the optical waveguide of said planar waveguide optical circuit, and N number of photodetectors corresponding to said N number of optical waveguides are provided as said photodetector, and
a light path isolation means for isolating N number of reflected light paths, in which part of the signal light transmitted through said N number of optical waveguides is reflected by said reflection filter to the corresponding photodetectors, is provided between said N number of reflected light paths.

2. The optical waveguide module according to Claim 1, **characterized in that** the inclination angle θ of said groove formed in said planar waveguide optical circuit is within an angle range of 0° < θ ≤ 40°.

3. The optical waveguide module according to Claim 1, **characterized in that** a resin material having substantially the same refractive index as the'core of said optical waveguide is used as said filler resin.

4. The optical waveguide module according to Claim 1, **characterized in that** said filler resin is installed so as to seal not only the inside of said groove but also a specific portion of the top surface of said pl-anar waveguide optical circuit including the upper part of said groove, and resin materials having substantially the same refractive index as each other are used as the inner filler resin that seals the inside of said groove and the upper filler resin that seals the top surface of said planar waveguide optical circuit.

5. The optical waveguide module according to Claim 1, **characterized in that** a coating film that prevents reflection in the wavelength band of the signal light being used is provided at the interface between said planar waveguide optical circuit and said photodetector, or at the interface between said filler resin and said photodetector.

6. The optical waveguide module according to Claim 1, **characterized in that** the light receiving area of said photodetector is formed in a substantially elliptical shape including an elliptical reflected light spot produced by said reflected light reflected by said reflection filter.

7. The optical waveguide module according to Claim 1, **characterized in that** said light path isolation means is a light blocking means provided between said N number of optical waveguides so that light that passes from a reflected light path into an adjacent reflected light path will be blocked within said planar waveguide optical circuit.

8. The optical waveguide module according to Claim 1, **characterized in that** said light path isolation means is a light blocking means provided such that light that passes from a reflected light path into an adjacent reflected light path will. be blocked within said filler resin.

9. The optical waveguide module according to Claim 8, **characterized in that** said filler resin is installed so as to seal not only the inside of said groove but also a specific portion of the top surface of said planar waveguide optical circuit including the upper part of said groove, and a mounting member for mounting said N number of photodetectors is provided on the top side of said planar waveguide optical circuit, and
said light blocking means consists of a light blocking component provided to said mounting member so as to protrude into the upper filler resin that seals the top of said planar waveguide optical circuit.
